(19) Europäisches Patentamt

European Patent Office

Office européen des brevets

(11) Veröffentlichungsnummer: **0 685 950 A2**

## (12) EUROPÄISCHE PATENTANMELDUNG

(21) Anmeldenummer: **95201421.5**

(22) Anmeldetag: **31.05.95**

(30) Priorität: **03.06.94 DE 4419343**

(43) Veröffentlichungstag der Anmeldung:
**06.12.95 Patentblatt 95/49**

(84) Benannte Vertragsstaaten:
**DE FR GB IT**

(51) Int. Cl.⁶: **H04L 12/43, H04J 3/08**

(71) Anmelder: **Philips Patentverwaltung GmbH**
**Röntgenstrasse 24**
**D-22335 Hamburg (DE)**
㊸ **DE**

(71) Anmelder: **Philips Electronics N.V.**
**Groenewoudseweg 1**
**NL-5621 BA Eindhoven (NL)**
㊸ **FR GB IT**

(72) Erfinder: **Kraemer, Rolf, Dr.-Ing.**
**c/o Philips Patentverwalt. GmbH,**
**Röntgenstrasse 24**
**D-22335 Hamburg (DE)**
Erfinder: **Du, Yonggang, Dr.-Ing.**
**c/o Philips Patentverwalt. GmbH,**
**Röntgenstrasse 24**
**D-22335 Hamburg (DE)**

Erfinder: **Reumerman, Hans-Jürgen, Dipl.-Ing.**
**c/o Philips Patentverwalt. GmbH,**
**Röntgenstrasse 24**
**D-22335 Hamburg (DE)**
Erfinder: **Bakker, Marinus**
**c/o Philips Patentverwalt. GmbH,**
**Röntgenstrasse 24**
**D-22335 Hamburg (DE)**
Erfinder: **May, Klaus Peter, Dipl.-Ing.**
**c/o Philips Patentverwalt. GmbH,**
**Röntgenstrasse 24**
**D-22335 Hamburg (DE)**
Erfinder: **Kahlert, Joachim, Dr.-Ing.**
**c/o Philips Patentverwalt. GmbH,**
**Röntgenstrasse 24**
**D-22335 Hamburg (DE)**
Erfinder: **van Wageningen, Andries, Ir.**
**c/o Philips Patentverwalt. GmbH,**
**Röntgenstrasse 24**
**D-22335 Hamburg (DE)**

(74) Vertreter: **Volmer, Georg, Dipl.-Ing.**
**Philips Patentverwaltung GmbH,**
**Röntgenstrasse 24**
**D-22335 Hamburg (DE)**

(54) **Lokales, nach dem asynchronen Transfermodus (ATM) arbeitendes Netzwerk.**

㊻ Die Erfindung bezieht sich auf ein lokales, nach dem asynchronen Transfermodus (ATM) arbeitendes Netzwerk mit mehreren Stationen (1 bis 4), die jeweils über eine Netzwerkschnittstelle (5 bis 8) gekoppelt sind, welche eine Koppelvorrichtung (18) und eine Steueranordnung (26) enthält und welche Zellen über die Koppelvorrichtung (18) zwischen Sende- und Empfangs-Ringanschlüssen (11, 12), wenigstens einer Station (1 bis 4) und wenigstens einer Steueranordnung (26) überträgt. Eine Steueranordnung (26) enthält eine Zugangssteuerung (31), die in Abhängigkeit vom Inhalt im Kopffeld einer von der Koppelvorrichtung (18) empfangenen Zelle zur Weiterleitung der Zelle oder von ersten Teilen der Zelle und/oder von Zusatzinformationen zu einem Bussystem (33) und damit gekoppelten Einheiten (36 bis 39) vorgesehen ist.

EP 0 685 950 A2

FIG. 1

Die Erfindung bezieht sich auf ein lokales, nach dem asynchronen Transfermodus (ATM) arbeitendes Netzwerk mit mehreren Stationen, die jeweils über eine Netzwerkschnittstelle gekoppelt sind, welche eine Koppelvorrichtung und eine Steueranordnung enthält und welche Zellen über die Koppelvorrichtung zwischen Sende- und EmpfangsRinganschlüssen, wenigstens einer Station und wenigstens einer Steueranordnung überträgt.

Ein lokales Netzwerk, welches nach dem asynchronen Transfermodus (ATM) arbeitet, ist aus der Veröffentlichung "Ohne Chips nichts los - Standard-Chips für ATM-Systeme sind im Kommen" von Bernd Reder, Elektronik 1/1993, Seiten 66 bis 75, bekannt. In diesem Übersichtsaufsatz wird der gegenwärtige Stand bei der Entwicklung von integrierten Schaltungen für Anwendungen in lokalen Netzwerken diskutiert, die nach dem asynchronen Transfermodus (ATM) arbeiten. Jede Station ist dabei über eine Netzwerkschnittstelle mit den Ringanschlüssen des lokalen Netzwerkes verbunden. Zur Steuerung des ATM-Zellstromes werden in der Netzwerkschnittstelle Koppelvorrichtungen (switches) verwendet.

Bei Verwendung eines asynchronen Transfermodus in einem System werden Nutzinformationen, z.B. Fernsprech-, Bild- oder Tonsignale, in Paketen fester Länge über Anordnungen zur digitalen Signalverarbeitung gesendet. Als ein Paket fester Länge wird eine Zelle bezeichnet, die eine vorbestimmte Anzahl von Bytes (53 Bytes) aufweist. Jede Zelle besteht aus einem Kopffeld mit einer Länge von 5 Byte und einem Informationsfeld, in dem die Nutzinformation untergebracht ist, mit einer Länge von 48 Byte. In einem solchen Kopffeld sind Wegekennungen, Daten zur Fehlererkennung und Daten für Steuerinformationen vorhanden. Unter Wegekennungen sind Bündelkennungen und Verbindungskennungen zu verstehen. Die Verbindungskennung, die auch als VCI (Virtual Channel Identifier) bezeichnet wird, enthält die Angabe über den Bestimmungsort der Zelle in dem System. Zur Übermittlung einer Zelle wird anhand der Verbindungskennung ein virtueller Kanal zur Verfügung gestellt. In der Regel wird ein VCI nach Erreichen einer Vermittlungsstelle jeweils verändert. Ein Bündel mehrerer virtueller Kanäle wird als virtueller Pfad bezeichnet. Ein virtueller Pfad wird durch die Bündelkennung gekennzeichnet. Ein solcher virtueller Pfad wird VPI (Virtual Path Identifier) genannt. Zellen sind aufeinanderfolgend bestimmten Zeitabschnitten zugeordnet. Die Dauer eines solchen Zeitabschnittes hängt von der zugrundegelegten Taktfrequenz der Übermittlungskomponente ab. Falls keine Nutzinformation vorhanden ist, werden in einem solchen Zeitabschnitt Leerzellen übertragen, d.h. Zellen ohne Nutzinformation. Zellen, die eine Nutzinformation beinhalten, werden als Nutzzellen bezeichnet.

Eine Netzwerkschnittstelle des oben genannten lokalen Netzwerkes kann beispielsweise über mehrere Sende- und Empfangs-Ringanschlüsse mit weiteren Netzwerkschnittstellen und auch mit mehreren Stationen gekoppelt sein. Eine Station kann beispielsweise ein Bildfernsprecher, ein Personal-Computer, eine Workstation oder ein Fernsprecher sein. Für Steuerungsaufgaben ist noch wenigstens eine Steueranordnung vorhanden, die in der Regel aus einem Bussystem, einer Bussteuerung, Speicherbausteinen, Schnittstellen, einer Arithmetisch-Logischen Einheit usw. besteht. Die Steueranordnung kann beispielsweise in Zellen verpackte Sprachinformationen über eine Schnittstelle zu einer weiteren Einheit übertragen, zum Verbindungsaufbau und -abbau eingesetzt werden usw. Eine solche Steueranordnung kann jedoch nicht mit der maximal verfügbaren Bitrate des lokalen Netzwerkes arbeiten. Ein Zellenstrom, der beispielsweise die Bitrate von 155 Mbit/s aufweist, kann in der Steueranordnung nicht mit der heute verfügbaren Technik verarbeitet werden. In der Steueranordnung ist heute eine Zellenstrom mit einer Bitrate von ungefähr 10 Mbit/s bearbeitbar.

Der Erfindung liegt daher die Aufgabe zugrunde, ein lokales, nach dem asynchronen Transfermodus arbeitendes Netzwerk zu schaffen, bei welchem die Verarbeitunggeschwindigkeit eines Zellstromes in einer in der Netzwerkschnittstelle eingesetzten Steueranordnung erhöht ist.

Die Aufgabe der Erfindung wird durch ein lokales, nach dem asynchronen Transfermodus arbeitendes Netzwerk der eingangs genannten Art dadurch gelöst, daß eine Steueranordnung eine Zugangssteuerung enthält, die in Abhängigkeit vom Inhalt im Kopffeld einer von der Koppelvorrichtung empfangenen Zelle zur Weiterleitung der Zelle oder von ersten Teilen der Zelle und/oder von Zusatzinformationen zu einem Bussystem und damit gekoppelten Einheiten vorgesehen ist.

Die Erhöhung der Verarbeitungsgeschwindigkeit des Zellstromes in der in einer Netzwerkschnittstelle eingesetzten Steueranordnung des erfindungsgemäßen lokalen Netzwerkes erfolgt dadurch, daß nur die Teile einer Zelle zum Bussystem der Steueranordnung weitergeleitet werden, die für die Weiterbearbeitung erforderlich sind. Hierbei wird zuerst der Inhalt des Kopffeldes ausgewertet und in Abhängigkeit von dieser Auswertung die erforderlichen Teile der Zelle von einer Zugangssteuerung zum Bussystem weitergeleitet. Die Auswertung des Kopffeldes der Zelle kann beispielsweise in der Zugangssteuerung oder in der Koppelvorrichtung oder in einer Schaltung vor der Koppelvorrichtung durchgeführt werden. Vollständig kann eine Zelle auch weitergeleitet werden. Weiter ist auch möglich nur eine Zusatzinformation an das Bussystem zu geben. Dies kann beispielsweise für eine auf eine spezielle Verbindung bezogene Abrechnung von Gebühreneinheiten erforderlich sein. Die Zusatzinformation kann auch mit der Zelle oder Teilen der Zelle weitergegeben werden.

Die Zugangssteuerung ist des weiteren zur Weiterleitung der von wenigstens einer Einheit bearbeiteten Zelle oder von in wenigstens einer Einheit bearbeiteten ersten Teilen der Zelle und/oder der nicht bearbeiteten Zelle oder der nicht bearbeiteten restlichen Teile der Zelle zur Koppelvorrichtung vorgesehen. Nach Bearbeitung einer Zelle oder ersten Teilen der Zelle, in den mit dem Bussystem gekoppelten Einheiten, wird die bearbeitete Zelle oder die bearbeiteten ersten Teile der Zelle über die Zugangssteuerung der Koppelvorrichtung wieder zugeführt. Es kann auch von einer mit dem Bussystem gekoppelten Einheit eine vollständig neu erzeugte Zelle der Zugangssteuerung zur Weitergabe an die Koppelvorrichtung geliefert werden. Die ersten Teile der Zelle, die in einer Einheit bearbeitet worden sind, werden in der Zugangssteuerung mit den nicht bearbeiteten, restlichen Teilen der Zelle wieder kombiniert und als zusammengesetzte Zelle zur Koppelvorrichtung gegeben.

Um auf einfache Weise eine Kombination der nicht bearbeiteten und der bearbeiteten Teile einer Zelle zu ermöglichen, enthält eine Steueranordnung einen Eingangs-Zwischenpuffer zur Zwischenspeicherung wenigstens einer von der Koppelvorrichtung empfangenen Zelle und einen Ausgangs-Zwischenpuffer zur Zwischenspeicherung von wenigstens einer zur Koppelvorrichtung zu sendenden Zelle. Die Zugangssteuerung ist dabei zur Steuerung des Auslesevorgangs einer Zelle aus dem Eingangs-Zwischenpuffer und des Einlesevorgangs einer Zelle in den Ausgangs-Zwischenpuffer vorgesehen.

Zur Steuerung des Übertragungsvorgangs einer Zelle oder von ersten Teilen einer Zelle zum Bussystem ist eine Tabelle vorhanden, die die Adresse des ersten und letzten zum Bussystem zu übertragenden Bytes einer Zelle und/oder Zusatzinformationen in Abhängigkeit von dem Inhalt des Kopffeldes der in dem Eingangs-Zwischenpuffer zwischengespeicherten Zelle an die Zugangssteuerung liefert. Der Zugangssteuerung wird also in Abhängigkeit von dem Inhalt des Kopffeldes der in dem Eingangs-Zwischenpuffer zwischengespeicherten Zelle die Information über die Adresse des im Eingangs-Zwischenpuffer abgelegten ersten und letzten zu übertragenden Bytes mitgeteilt. Zusätzlich werden der Zugangssteuerung noch vorhandenen Zusatzinformationen zugeführt. Soll eine vollständige Zelle übertragen werden, werden als Adressen die Speicherplätze des Eingangs-Zwischenpuffers genannt, die das erste und das letzte Byte der Zelle enthalten.

Eine Ausführungsform der Zugangssteuerung enthält

- ein erstes Register zur Speicherung der von der Tabelle gelieferten Zusatzinformationen,
- einen ersten Multiplexer zur Weitergabe der von dem Eingangs-Zwischenpuffer ausgegebenen Bytes einer Zelle oder von Zusatzinformationen aus dem ersten Register,
- einen zweiten Multiplexer zur Weitergabe der von dem Eingangs-Zwischenpuffer oder von dem Bussystem gelieferten Bytes zum Ausgangs-Zwischenpuffer,
- einen Zähler zur Lieferung von Adressen für den Auslesevorgang von Bytes aus dem Eingangs-Zwischenpuffer und zum Verändern seines Zählerinhaltes nach Ausgabe eines Bytes einer Zelle aus dem Eingangs-Zwischenpuffer,
- eine Vergleichsschaltung, die zur Steuerung der Multiplexer in Abhängigkeit von dem Zählerinhalt und der ersten und letzten Adresse der zum Bussystem zu übertragenen Bytes vorgesehen ist.

Nach Einschreiben einer Zelle in den Eingangs-Zwischenpuffer dient ein zweites Register zum Empfang der Adresse des letzten zu übertragenen Bytes und ein drittes Register und der aufwärts zählende Zähler zum Empfang der Adresse des ersten zu übertragenen Bytes.

Zur Steuerung des Auslesevorgangs aus dem Eingangs-Zwischenpuffer ist die Vergleichsschaltung

- zum Vergleich des Zählerinhaltes und des Inhaltes des zweiten Registers,
- mittels des ersten Multiplexers zur Kopplung des Eingangs-Zwischenpuffers mit dem Bussystem, wenn der Zählerinhalt kleiner als der Inhalt des zweiten Registers ist und
- mittels des ersten Multiplexers zur Kopplung des ersten Registers mit dem Bussystem vorgesehen, wenn der Zählerinhalt gleich oder größer als der Inhalt des zweiten Registers ist.

Zur Steuerung des Einlesevorgangs in den Ausgangs-Zwischenpuffer ist die Vergleichsschaltung

- zur Zurücksetzung des Zähler auf die Adresse des ersten Bytes der Zelle,
- zum Vergleich des Zählerinhaltes und der Inhalte des zweiten und dritten Registers,
- mittels des ersten Multiplexers zur Kopplung des Eingangs-Zwischenpuffers mit dem zweiten Multiplexer,
- mittels des zweiten Multiplexers zur Kopplung des Ausgangs-Zwischenpuffers mit dem Bussystem, wenn
  - der Zählerinhalt größer oder gleich dem Inhalt des dritten Registers und der Zählerinhalt kleiner oder gleich dem Inhalt des zweiten Registers ist oder

4

EP 0 685 950 A2

- die Inhalte der Register oder der Zählerinhalt der Adresse des letzten Bytes der Zelle entsprechen, und
- mittels des zweiten Multiplexers zur Kopplung des Ausgangs-Zwischenpuffers mit dem ersten Multiplexer vorgesehen ist, wenn
  - der Zählerinhalt und die Inhalte der Register gleich der Adresse des ersten Bytes einer Zelle sind oder
  - der Zählerinhalt kleiner als die Inhalte des zweiten und dritten Registers und der Inhalt des zweiten Registers nicht gleich der Adresse des letzten Bytes der Zelle ist oder
  - der Zählerinhalt größer als die Inhalte des zweiten und dritten Registers ist und der Zählerinhalt nicht größer als die Adresse des letzten Bytes der Zelle ist.

Die Adressierung der Tabelle, welche die Adresse des ersten und letzten zum Bussystem zu übertragenen Bytes und die Zusatzinformationen der Zusatzsteuerung liefert, wird mittels eines Tabellenzeigers durchgeführt. Dieser Tabellenzeiger wird in einer Empfangsschaltung mittels einer Wegetabelle zu einer eine Steueranordnung als Bestimmungsort aufweisenden Zelle hinzugefügt. Ein Empfangs-Ringanschluß, ein eine Zelle von einer Station liefernder Anschluß und ein eine Zelle von einer Steueranordnung liefernder Anschluß sind über jeweils eine Empfangsschaltung mit der Koppelvorrichtung gekoppelt. Die Koppelvorrichtung ist zur Abtrennung der als Adresse für einen Inhalt der Tabelle dienenden Tabellenzeiger von der Zelle und zur Zuführung des Tabellenzeigers zur Tabelle vorgesehen.

Die Erfindung bezieht sich auch auf eine Netzwerkschnittstelle für ein lokales, nach dem asynchronen Transfermodus (ATM) arbeitendes Netzwerk, mit der wenigstens eine Station gekoppelt ist, die eine Koppelvorrichtung und eine Steueranordnung enthält und welche Zellen über die Koppelvorrichtung zwischen Sende- und Empfangs-Ringanschlüssen, wenigstens einer Station und wenigstens einer Steueranordnung überträgt. Eine Steueranordnung enthält eine Zugangssteuerung, die in Abhängigkeit vom Inhalt im Kopffeld einer von der Koppelvorrichtung empfangenen Zelle zur Weiterleitung der Zelle oder von ersten Teilen der Zelle und/oder von Zusatzinformationen zu einem Bussystem und damit gekoppelten Einheiten vorgesehen ist.

Ausführungsbeispiele der Erfindung werden nachstehend anhand der Figuren näher erläutert. Es zeigen:

Fig. 1 ein lokales Netzwerk,
Fig. 2 eine in dem lokalen Netzwerk nach Fig. 1 verwendbare Netzwerkschnittstelle,
Fig. 3 eine in der Netzwerkschnittstelle eingesetzte, Zentralspeichersteuerung,
Fig. 4 ein Zeitdiagramm zur Erläuterung der Funktionsweise der Zentralspeichersteuerung nach Fig. 3 und
Fig. 5 eine in der Netzwerkschnittstelle eingesetzte Zugangssteuerung.

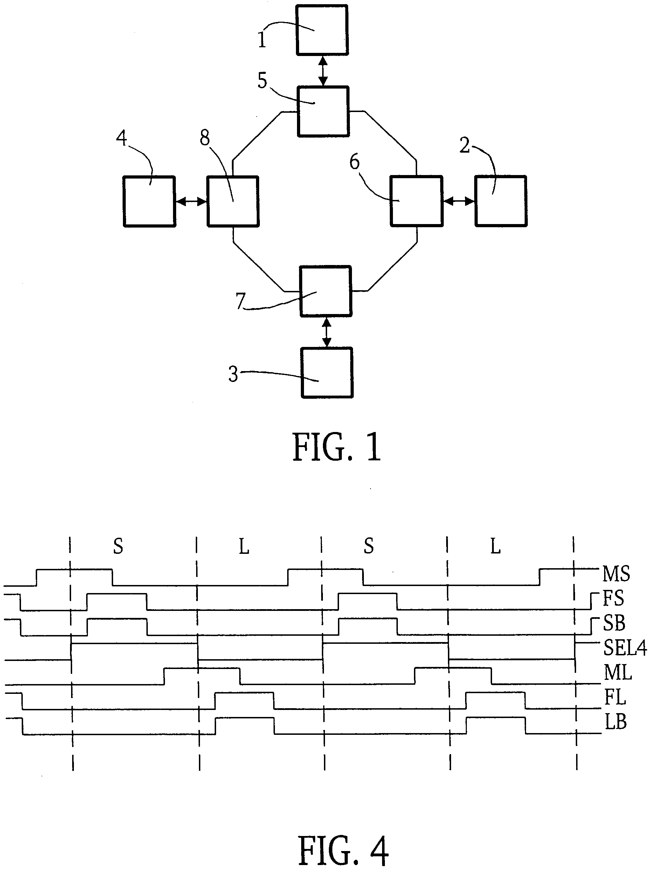

In Fig. 1 ist ein Ausführungsbeispiel ein lokales Netzwerk mit vier Stationen 1 bis 4 dargestellt, die jeweils über zugeordnete Netzwerkschnittstellen 5 bis 8 mit Ringanschlüssen gekoppelt sind. Eine Station 1 bis 4 kann beispielsweise ein Bildfernsprecher` ein Personal-Computer oder eine Workstation bzw. ein Fernsprecher sein. Die Nachrichten bzw. Informationen, die von den Stationen 1 bis 4 bzw. den Netzwerkschnittstellen 5 bis 8 stammen, werden nach dem asynchronen Transfermodus mittels Zellen übertragen. Eine Zelle enthält ein Kopffeld mit 5 Byte und ein Informationsfeld mit 48 Byte. Die im Kopffeld der Zelle enthaltenen Informationen dienen insbesondere zur Adressierung und zur Durchführung von Vermittlungsfunktionen.

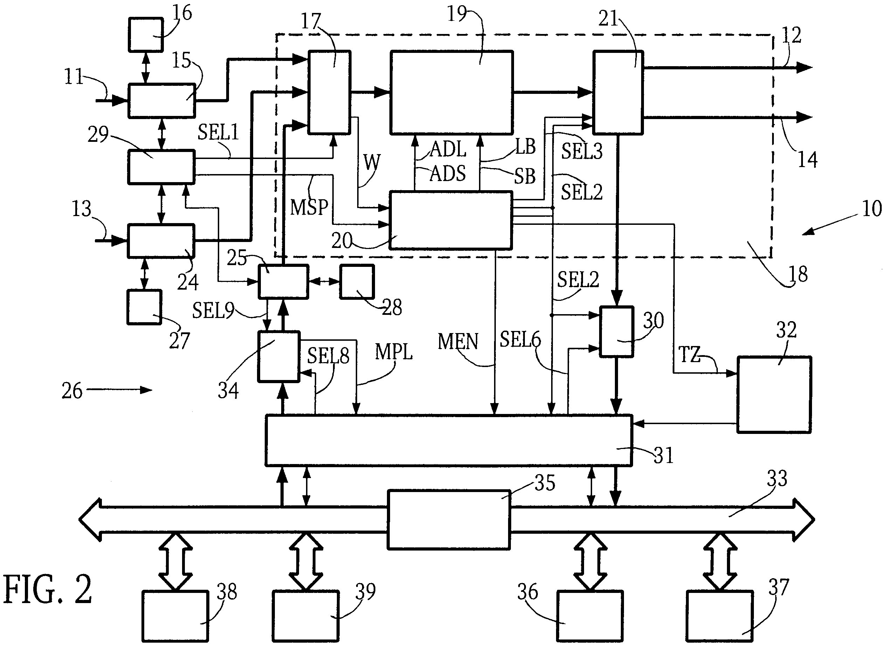

Eine Netzwerkschnittstelle 10, die über einen Empfangs-Ringanschluß 11 und Sende-Ringanschluß 12 mit weiteren Netzwerkschnittstellen und über interne Verbindungen 13 und 14 mit einer Station 1, 2, 3 oder 4 gekoppelt ist, zeigt Fig. 2 in einer detaillierten Darstellung. Vom Empfangs-Ringanschluß 11 erhält eine in der Netzwerkschnittstelle 10 enthaltene Empfangsschaltung 15 einen Zellenstrom. In der Empfangsschaltung 15 wird in einem nicht näher dargestellten Pufferspeicher zumindestens eine Anpassung des Zellenstroms an ein internes Taktsignal, eine Zwischenspeicherung einer Zelle, eine Auswertung des Kopffeldes der Zelle, eine Veränderung der Information des Kopffeldes und eine Hinzufügung einer Wegeinformation (tag) zur Zelle vorgenommen. In der Wegeinformation sind zumindest die Bestimmungsorte der Zelle innerhalb der Netzwerkschnittstelle 10 (z.B. Sende-Ringanschluß 12) enthalten.

Die Empfangsschaltung 15 ist mit einer Wegetabelle 16 verbunden, die in Abhängigkeit von Informationen im Kopffeld einer Zelle Daten der Empfangsschaltung 15 liefert. Hierbei werden bestimmte Teile der Daten im Kopffeld als Speicheradresse für die Wegetabelle 16 verwendet, welche der Empfangsschaltung 15 die unter der Speicheradresse gespeicherten Daten liefert. In das Kopffeld der Zelle wird z.B. eine neue Adresse eingefügt und der Zelle die Wegeinformation W von beispielsweise 2 Byte hinzugefügt.

Der Ausgang der Empfangsschaltung 15 ist mit einem Eingangs-Multiplexer 17 gekoppelt, der Bestandteil einer Koppelvorrichtung 18 ist. In der Koppelvorrichtung 18 ist ferner noch ein Zentralspeicher 19, eine

5

Zentralspeichersteuerung 20 und ein Demultiplexer 21 enthalten. Der Eingangs-Multiplexer 17 leitet die Zellen zu einem Zentralspeicher 18 weiter, trennt die Wegeinformation W von der empfangenen Zelle ab und liefert diese der Zentralspeichersteuerung 20.

Der Eingangs-Multiplexer 17 erhält noch Zellen von zwei weiteren Empfangsschaltungen 24 und 25. Der Empfangsschaltung 25 werden Zellen von der zugeordneten Station 1, 2, 3 oder 4 über die interne Verbindung 13 zugeführt und der Empfangsschaltung 25 ein Zellenstrom von einer Steueranordnung 26. Die Empfangsschaltungen 24 und 25, die auf die gleiche Weise arbeiten, wie die Empfangsschaltung 15, sind ebenfalls mit Wegetabellen 27 und 28 verbunden.

Die Empfangsschaltungen 15, 24 und 25 melden einer Empfangssteuerschaltung 29 mittels eines Meldesignals MSP die Ankunft einer Zelle. Die Empfangssteuerschaltung 29 sendet ein Selektionssignal SEL1 zum Eingangs-Multiplexer 17, der entsprechend dem Selektionssignal SEL1 einen seiner Eingänge mit dem Eingang des Zentralspeichers 19 verbindet und die Wegeinformation W einer zum Zentralspeicher 19 weitergeleiteten Zelle zur Zentralspeichersteuerung 20 gibt. Ferner übermittelt die Empfangssteuerschaltung 29 noch Freigabesignale zu den Empfangsschaltungen 15, 24 und 25, die das Auslesen einer Zelle aus einer Empfangsschaltung 15, 24 oder 25 bewirken. Die Empfangssteuerschaltung 29 gibt jeweils in zyklischer Reihenfolge eine Empfangsschaltung 15, 24 oder 25 zum Auslesen einer Zelle zum Eingangs-Multiplexer frei. Ähnliche Empfangsschaltungen und Empfangssteuerschaltungen wie die Empfangsschaltungen 15, 24 und 25 und die Empfangssteuerschaltung 29 werden bei derzeitig verfügbaren ATM-Systemen verwendet.

Die Zentralspeichersteuerung 20 liefert beim Einschreibvorgang dem Zentralspeicher 19 Schreibadressen ADS und gibt den Zentralspeicher 19 zum Einschreiben über ein Schreib-Freigabesignal SB frei. Hierbei muß zuvor die Meldung über das Meldungssignal MSP von der Empfangssteuerschaltung 29 empfangen worden sein, daß eine Zelle zu speichern ist. In der Zentralspeichersteuerung 20 wird in Abhängigkeit von den empfangenen Wegeinformationen der Ausleseprozeß gesteuert. Beim Auslesevorgang liefert die Zentralspeichersteuerung 20 dem Zentralspeicher 19 Leseadressen ADL und gibt den Zentralspeicher 19 zum Auslesen über ein Lese-Freigabesignal LB frei.

Eine aus dem Zentralspeicher 19 ausgelesene Zelle wird dem Demultiplexer 21 zugeführt, der eine Zelle entweder zu dem Sende-Ringanschluß 12, der internen Verbindung 14 oder einem Eingangs-Zwischenpuffer 30 weiterleitet. Falls eine Zelle zum Eingangs-Zwischenpuffer 30, der Bestandteil der Steueranordnung 26 ist, gelangt ist, erhält eine in der Steueranordnung 26 enthaltene Zugangssteuerung 31 eine entsprechende Meldung über ein Meldungssignal MEN. Des weiteren führt die Zentralspeichersteuerung 20 dem Demultiplexer 21 Selektionssignale SEL2 und SEL3 zu, mit denen dieser gesteuert wird.

Die Zugangssteuerung 31 erhält von einer Tabelle 32 Informationen darüber, welche Bytes der im Eingangs-Zwischenpuffer 30 abgelegten Zelle weiter zu einem mit der Zugangssteuerung 31 gekoppelten Bussystem 33 gegeben werden. Es kann zusätzlich auch eine von der Tabelle 32 gelieferte Zusatzinformation Z mit den ausgewählten Bytes und/oder eine Zusatzinformation Z dem Bussystem 33 von dem Eingangs-Zwischenpuffer 30 bzw. der Tabelle 32 zugeführt werden. Welche Daten die Tabelle 32 dem Bussystem 33 liefert, hängt von einem von der Zentralspeichersteuerung 20 gelieferten Tabellenzeiger TZ ab. Der Tabellenzeiger TZ wird in die Wegeinformation W eingefügt, die in den Empfangsschaltungen 15 und 24 den Zellen mitgegeben wird. In der Zentralspeichersteuerung 20 wird ein Tabellenzeiger TZ aus der Wegeinformation W entnommen, zwischengespeichert und der Tabelle 32 als Adresse geliefert.

Die Teile der Zelle, die nicht zum Bussystem 33 gegeben werden, leitet die Zugangssteuerung 31 zu einem zwischen Empfangsschaltung 25 und Zugangssteuerung 31 angeordneten Ausgangs-Zwischenpuffer 34 weiter. Das Bussystem 33 enthält eine Bussteuerung 35, welche den Busverkehr zwischen der Zugangssteuerung 31 und weiteren an das Bussystem 33 angeschlossenen Einheiten, wie z.B. Arithmetisch-Logische-Einheit 36 (ALU), wenigstens einer Schnittstelle 37, wenigstens einem Speicherbaustein 38 und einer Speichersteuereinheit 39 steuert. Die Schnittstelle 37 dient beispielsweise dazu, Informationen einer Workstation oder einem Personal-Computer zu liefern und/oder weiterzuleiten. Die von dem Bussystem 33 der Zugangssteuerung 31 zugeführten Bytes (erste, bearbeitete Teile der Zelle) werden gegebenenfalls mit den von dem Eingangs-Zwischenpuffer 30 gelieferten restlichen Teilen der Zelle in dem Ausgangs-Zwischenpuffer 34 verbunden und zwischengespeichert. Der Ausgangs- Zwischenpuffer 34 meldet der Zugangssteuerung 31, wenn eine Zelle aufgenommen werden kann.

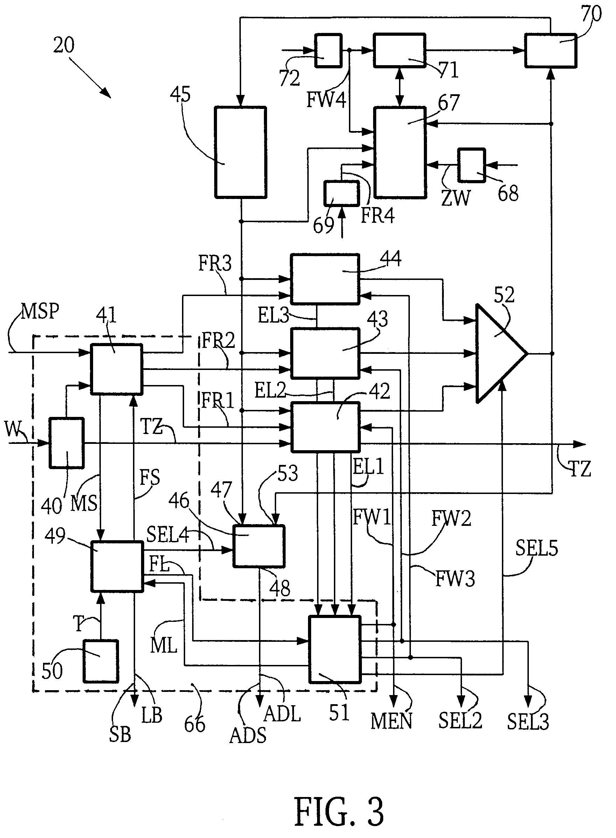

In Fig. 3 ist ein Ausführungsbeispiel einer Zentralspeichersteuerung 20 dargestellt. Eine in der Zentralspeichersteuerung 20 enthaltene Auswerteschaltung 40 entnimmt aus der vom Eingangs-Multiplexer 17 gelieferten Wegeinformation W den oder die Bestimmungsorte einer im Zentralspeicher 19 zu speichernden Zelle und leitet diese Information über den Bestimmungsort an einen Schreibdecoder 41 und gegebenenfalls einen in der Wegeinformation enthaltenen Tabellenzeiger TZ an einen Wartepuffer 42 zur Zwischenspeicherung weiter. Wenn der Schreibdecoder 41 eine Meldung über das Meldungssignal MSP von der Empfangssteuerschaltung 29, daß eine Zelle gespeichert werden soll, und weitere später zu erläuternde Signale erhalten hat, gibt dieser über ein Freigabesignal FR1, FR2 oder FR3 einen oder mehrere von drei Wartepuffern 42, 43 oder 44 frei. Welcher Wartepuffer 42, 43 bzw. 44 die Freigabe erhält, hängt vom den Bestimmungsorten der Zelle ab. Soll die Zelle zum Sende-Ringanschluß 12 gegeben werden, wird der Wartepuffer 44 zum Einschreiben einer von einem Adressenspeicher 45 gelieferten Adresse freigegeben. Ist der Bestimmungsort der Zelle die interne Verbindung 14, wird der Wartepuffer 43 zum Einschreiben einer Adresse vom Adressenspeicher 45 freigegeben. Eine Freigabe des Wartepuffers 42 erfolgt, wenn die Zelle dem Eingangs-Zwischenpuffer 30 zugeführt werden soll. Die Freigabe kann entweder für einen oder mehrere Wartepuffer 42, 43 oder 44 erfolgen (Einzel- oder Mehrfachübertragung einer Zelle).

Mit der Freigabe für das Einschreiben einer Adresse in den Wartepuffer 42 kann auch erst der von der Auswerteschaltung 40 gelieferte Tabellenzeiger TZ eingeschrieben werden.

Die von dem Adressenspeicher 45 gelieferte Adresse wird auch in einem Belegungsspeicher 67 zusammen mit einem Zählwert gespeichert. Ein unter der von dem Adressenspeicher 45 gelieferten Adresse gespeicherter Zählwert wird von einem Zählwert-Decoder 68 gebildet. Hierzu werden dem Zählwert-Decoder 48 die Freigabesignale FR1, FR2 und FR3 zugeführt, der daraus einen Zählwert gemäß folgender Tabelle bildet:

| FR3 | FR2 | FR1 | Zählwert | |
|-----|-----|-----|----------|------|
| | | | dezimal | binär |
| 0 | 0 | 1 | 1 | 01 |
| 0 | 1 | 0 | 1 | 01 |
| 0 | 1 | 1 | 2 | 10 |
| 1 | 0 | 0 | 1 | 1 |
| 1 | 0 | 1 | 2 | 10 |
| 1 | 1 | 0 | 2 | 10 |
| 1 | 1 | 1 | 3 | 11 |

Die Freigabesignale FR1 bis FR3 weisen den Wert "1" auf, wenn sie einen Wartepuffer 42 bis 44 freigeben. Beispielsweise wird, wenn das Freigabesignal FR3 den Wartepuffer 44 und das Freigabesignal FR1 den Wartepuffer 42 freigibt, der Zählwert dezimal "2" oder binär "10" in dem Zählwert-Decoder 68 gebildet. Damit eine Adresse und ein Zählwert in den Belegungsspeicher 67 eingeschrieben werden kann, muß dieser vorher über ein Freigabesignal FR4 freigegeben werden. Dieses Freigabesignal FR4 wird über ein ODER-Gatter 69 aus den Freigabesignalen FR1 bis FR3 erzeugt.

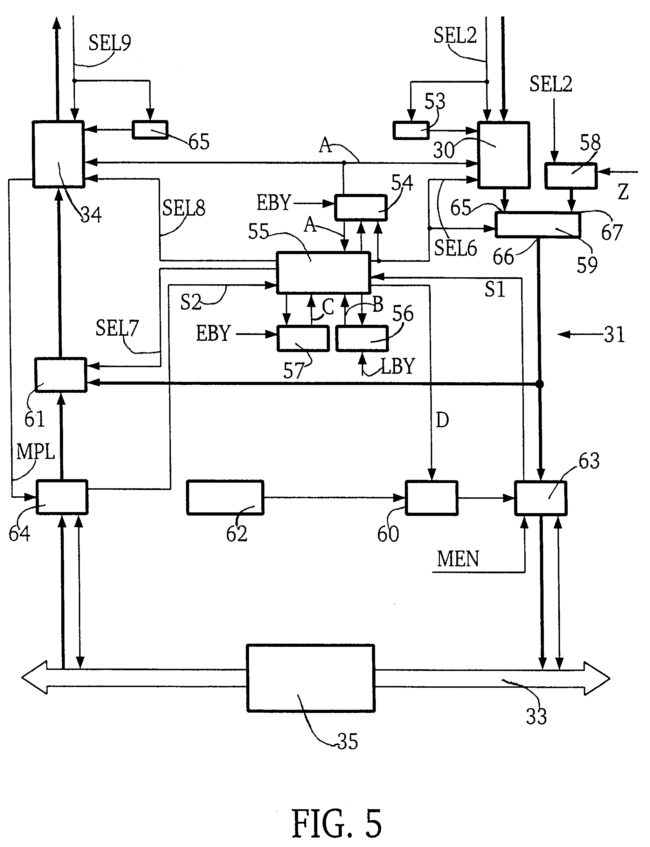

Die in einen Wartepuffer 42, 43 oder 44 eingeschriebene Adresse wird auch einem ersten Eingang 47 eines Multiplexers 46 zugeführt. Wenn der erste Eingang 47 des Multiplexers 46 mit seinem Ausgang 48 verbunden ist, liefert die Zentralspeichersteuerung 20 dem Zentralspeicher 19 eine Schreibadresse ADS. Der Multiplexer 46 wird mittels eines Selektionssignals SEL4 von einem Synchronisierer 49 gesteuert, der ein unabhängiges Taktsignal T von einem Taktgenerator 50 erhält. Der Synchronisierer 49 erzeugt einen Schreibzyklus S und einen Lesezyklus L (vgl. Fig. 4). Während des Schreibzyklus S ist der Ausgang 48 des Multiplexers 46 über seinen ersten Eingang 47 mit dem Ausgang des Adressenspeichers 45 verbunden.

Der Schreibdecoder 41 meldet mittels eines Meldesignals MS (vgl. Fig. 4) dem Synchronisierer 49, wenn eine Zelle in einen Wartepuffer 42, 43 oder 44 einzuschreiben ist. Der Synchronisierer 49 gibt dann während des Schreibzyklus über ein Freigabesignal FS dem Schreibdecoder 41 die Nachricht, daß er die Wartepuffer 42 bis 44 zum Einschreiben freigeben kann. Ferner wird von dem Synchronisierer 49 ein Schreib-Freigabesignal SB an den Zentralspeicher 19 übermittelt.

Die Zentralspeichersteuerung 20 enthält des weiteren einen Lesedecoder 51, der den Ausleseprozeß aus den Wartepuffern 42, 43 und 44 steuert. Im Regelfall gibt der Lesedecoder jeweils abwechselnd die Wartepuffer 42 bis 44 zum Auslesen einer gespeicherten Adresse über drei Freigabesignale FW1, FW2 und FW3 frei. Ist jedoch in einem Wartepuffer 42 bis 44 keine Adresse enthalten, erhält dieser leere Wartepuffer 42, 43 oder 44 keine Freigabe. Von jedem Wartepuffer 42 bis 44 werden daher dem Lesedecoder 51 Meldungen über Meldesignale EL1, EL2 und EL3 zugeführt, wenn keine Adresse gespeichert ist.

Der Lesedecoder 51 meldet mittels eines Meldesignals ML (vgl. Fig. 4) dem Synchronisierer 49, wenn ein Wartepuffer 42, 43 oder 44 freigegeben werden soll. Liegt ein Lesezyklus L vor, so übermittelt der Synchronisierer 49 dem Lesedecoder 51 über ein Freigabesignal FL, daß dieser einen Wartepuffer 42 bis 44 zum Auslesen einer Adresse freigeben kann. Nach der Freigabe über die Freigabesignale FW1, FW2 oder FW3 wird die Adresse aus einem Wartepuffer 42, 43 oder 44 über einen Multiplexer 52 einerseits zu einer Torschaltung 70 und andererseits zum zweiten Eingang 53 des Multiplexers 46 gegeben. Der Multiplexer 52 erhält noch ein Selektionssignal SEL5 von dem Lesedecoder 51. Erhält der Wartepuffer 42 die Freigabe vom Lesedecoder 51, wird auch ein gespeicherter Tabellenzeiger TZ an die Tabelle 32 angelegt.

Die Torschaltung 70 wird von einer mit dem Belegungsspeicher 67 gekoppelten Torsteuerung 71 gesteuert. Wenn eine Adresse von dem Multiplexer 52 geliefert wird, wird diese dem Belegungsspeicher 67 zugeführt. Der Belegungsspeicher 67 wird über ein Freigabesignal FW4 zur Auslesung des unter der Adresse gespeicherten Zählwertes an die Torsteuerung 71 freigegeben. Die Torsteuerung 71, die aus Logikbausteinen aufgebaut ist, läßt sich durch folgenden Ablauf erläutern:

1. Wenn Freigabe über Freigabesignal FW4 erfolgt, Dekrementierung des Zählwertes;

2. Veranlassung der Speicherung des neuen Zählerwertes im Belegungsspeicher 67;

3. Ist neuer Zählerwert gleich Null?

4. Ja: Öffnung der Torschaltung;

5. Nein: Weitere Sperrung der Torschaltung.

In der Torsteuerung 71 wird nach der Freigabe über das Freigabesignal FW4 der vom Belegungsspeicher 67 empfangene Zählwert dekrementiert. Der dekrementierte Zählwert wird daraufhin zurück in den Belegungsspeicher 67 geschrieben.

Falls der Zählwert gleich Null ist, wird die Torschaltung 70 geöffnet, so daß die von dem Multiplexer 52 gelieferte Adresse zum Adressenspeicher 45 gelangen kann und dort wieder eingeschrieben wird. Falls der Zählwert nicht Null ist, bleibt die Torschaltung 70 geschlossen. Der Zählerwert, der von dem Zählwert-Decoder 68 zugeführt wird, gibt die Anzahl der Kopien einer Zelle an. Wenn der Zählwert gleich 3 ist, soll eine Zelle zur Sende-Ringanschluß 12, zur internen Verbindung 14 und zur Steueranordnung 26 gegeben werden. Das Freigabesignal FW4 wird von einem ODER-Gatter 72 gebildet, welches die Freigabesignale FW1, FW2 und FW3 empfängt.

Die Freigabesignale FW1, FW2 und FW3 bilden auch die Selektionssignale SEL2 und SEL3 und das Meldungssignal MEN für die Zugangssteuerung 31, daß eine Zelle in den Eingangs-Zwischenpuffer 30 eingelesen werden soll. Der Adressenspeicher 45 arbeitet nach dem FIFO-Prinzip (FIFO = First-In, First-Out). Die wieder eingeschriebenen Adressen werden, nachdem alle Adressen einmal ausgelesen worden sind, von dem Adressenspeicher 45 in der Reihenfolge ihres Eintreffens wieder ausgelesen.

Während des Lesezyklus L wird der Selektionsbefehl SEL4 so geschaltet (vgl. Fig. 4), daß der zweite Eingang 53 des Multiplexers 46 mit seinem Ausgang 48 verbunden ist. Damit wird die von einem Wartepuffer 42, 43 oder 44 über die Multiplexer 52 und 46 geleitete Adresse als Leseadresse an den Zentralspeicher 19 gegeben. Der Synchronisierer 49 erlaubt während des Lesezyklus L das Auslesen einer Zelle aus dem Zentralspeicher 19. Die Auslesemöglichkeit wird über ein Lesesignal LB an den Zentralspeicher 19 gemeldet.

Es sei noch erwähnt, daß die Auswerteschaltung 40, der Schreibdecoder 41, der Synchronisierer 49, der Taktgenerator 50 und der Lesedecoder 51 eine Decodervorrichtung 66 bilden.

In Fig. 5 ist ein Ausführungsbeispiel für die Zugangssteuerung 31 dargestellt, die Zellen über den Eingangs-Zwischenpuffer 30 von der Koppelvorrichtung 18 erhält und Zellen über den Ausgangs-Zwischenpuffer 34 der Koppelvorrichtung 18 zuführt. Die Zugangssteuerung 31, die Teil der Steueranordnung 26 ist, leitet Zellen, Bytes einer Zelle und/oder von der Tabelle 32 zugeführte Zusatzinformationen Z zu dem Bussystem 33, das ebenso wie die Bussteuerung 35, die Schnittstelle 37, die Arithmetisch-Logische-Einheit 36, der Speicherbaustein 38 und die Speichersteuereinheit 39 Bestandteil eines Prozessorsystems sind. Ferner werden Zellen von der Zugangssteuerung 31 zum Ausgangs-Zwischenpuffer 34 geliefert.

Der Einlesevorgang in den Eingangs-Zwischenpuffer 30 wird mittels eines Zählers 53 gesteuert, der von dem Selektionssignal SEL2 gestartet wird und der Einschreibadressen für den Eingangs-Zwischenpuffer 30 erzeugt. Der Eingangs-Zwischenpuffer 30 wird ebenfalls über das Selektionssignal SEL2 zum Einschreiben einer Zelle freigegeben. Der Ausleseprozeß der Bytes einer gespeicherten Zelle aus dem Eingangs-Zwischenpuffer 30 wird mit einem Zähler 54 durchgeführt. Der Zähler 54 ist ebenso wie eine Vergleichsschaltung 55, zwei Register 56, 57 und 58, drei Multiplexer 59, 60 und 61, eine Datenbank 62 und zwei Direkt-Zugriffs-Steuerungen 63 und 64 (Direct Memory Access Controller) Bestandteil der Zugangssteuerung 31.

Mit der Übertragung einer Zelle über den Demultiplexer 21 zum Eingangs-Zwischenpuffer 30 wird der Tabellenzeiger TZ an die Tabelle 28 angelegt. Die Tabelle 28 liefert der Zugangssteuerung 31 unter der durch den Tabellenzeiger TZ gekennzeichneten Adresse eine Zusatzinformation Z und/oder die Adresse des ersten und letzten zu übertragenen Bytes (EBY, LBY) der in dem Eingangs-Zwischenpuffer 30 zu speichernden Zelle. Die von der Tabelle 32 gelieferte Zusatzinformation Z wird mittels des Selektionssignals SEL2 in dem Register 58 abgelegt.

8

EP 0 685 950 A2

Die Direkt-Zugriffs-Steuerung 63 erhält von der Zentralspeichersteuerung 20 eine Meldung über das Meldungssignal MEN, wenn eine Zelle vom Zentralspeicher 19 über den Schalter 22 in den Eingangs-Zwischenpuffer 30 geschrieben wird. Wie das bei bekannten Direkt-Zugriffs-Steuerungen üblich ist, fragt die Direkt-Zugriffs-Steuerung 63 bei der Bussteuerung 35 über das Bussystems 33 an, ob eine Übertragung von Bytes möglich ist. Ist ein solcher Transfer beispielsweise zur Schnittstelle 37 freigegeben, teilt dies die Direkt-Zugriffs-Steuerung 63 der Vergleichsschaltung 55 über ein Startsignal S1 mit. Die Vergleichsschaltung 55 veranlaßt nach der Freigabe über das Startsignal S1, daß die Adresse EBY des ersten in dem Eingangs-Zwischenpuffer 30 gespeicherten Bytes in den Zähler 54 und das Register 57 und die Adresse LBY des letzten zu übertragenen Bytes in das Register 56 eingeschrieben werden.

Die Vergleichsschaltung 55 vergleicht nach der Freigabe von der Direkt-Zugriffs-Steuerung 63 den Inhalt A des Zählers 54 mit dem Inhalt B des Registers 56. Ist der Inhalt B des Registers 56 größer als der Inhalt A des Zählers 54 wird über ein von der Vergleichsschaltung 55 erzeugtes Selektionssignal SEL6 der Zähler 54 zum Aufwärtszählen, der Eingangs-Zwischenpuffer 30 für das Auslesen von Bytes freigegeben und der Multiplexer 59 so geschaltet, daß Bytes des Eingangs-Zwischenpuffers über den Eingang 65 des Multiplexers 59 zu seinem Ausgang 66 gelangen können. Der Zähler 54 liefert an den Eingangs-Zwischenpuffer 30 Adressen für den Ausleseprozeß.

Stellt die Vergleichsschaltung 55 fest, daß der Inhalt A des Zählers 54 gleich dem Inhalt B des Registers 56 ist, wird der Zähler 54 über das Selektionssignal SEL6 und der Eingangs-Zwischenpuffer 30 zum Auslesen gesperrt. Ferner wird mittels des Selektionssignals SEL6 der zweite Eingang 67 des Multiplexers 59 mit seinem Ausgang 66 verbunden. Falls eine Zusatzinformation Z im Register 58 gespeichert ist, wird diese zur Direkt-Zugriffs-Steuerung 63 übertragen.

Der Direkt-Zugriffs-Steuerung 63 wird noch in einem bestimmten vorgegebenen Format von der Datenbank 62 mitgeteilt, wieviele Bytes jeweils von dem Eingangs-Zwischenpuffer 30 zum Bussystem 33 übertragen werden. Hierzu berechnet die Vergleichsschaltung 55 direkt nach dem Einschreiben die Differenz D zwischen den Adressen EBY und LBY des ersten und letzten Bytes. Diese Differenz D dient dazu den Multiplexer 60 so zu schalten, daß die Information in dem bestimmten vorgegebenen Format von der Datenbank 62 zur Direkt-Zugriffs-Steuerung 63 gelangt. Nach Empfang dieser Information teilt die Direkt-Zugriffs-Steuerung 63 dem Bussystem 33 bzw. der Bussteuerung 35 mit, wieviel Bytes zu übertragen sind. Wenn die Differenz gleich 0 ist, wird der Direkt-Zugriffs-Steuerung 63 von der Datenbank 62 die Information zugeführt, daß Zusatzinformationen vom Multiplexer 59 geliefert werden.

Das Auslesen von Bytes einer Zelle oder einer Gesamtzelle von einer mit dem Bussystem 33 gekoppelten Einheit wird mittels der weiteren Direkt-Zugriffs-Steuerung 64 vorgenommen. Die Bussteuerung 35 meldet über das Bussystem 33 der Direkt-Zugriffs-Steuerung 64, das Bytes von einer mit dem Bussystem gekoppelten Einheit zum Ausgangs-Zwischenpuffer 34 übertragen werden sollen. Die Direkt-Zugriffs-Steuerung 64 kann nur dann Bytes zum Ausgangs-Zwischenpuffer 34 senden, wenn dieser zuvor der Direkt-Zugriffs-Steuerung über ein Meldungssignal MPL gemeldet hat, daß keine Zelle gespeichert ist. Ist die Direkt-Zugriffs-Steuerung 64 zur Übertragung bereit, wird der Vergleichsschaltung 55 dies über ein Startsignal S2 gemeldet.

Nach der Freigabe der Vergleichsschaltung 55 über das Startsignal S2 wird der Zähler 54 auf Null gesetzt und zum Aufwärtszählen freigegeben. Der Zähler 54 erzeugt alle Adressen für den Einleseprozeß in den Ausgangs-Zwischenpuffer 34. Die Vergleichsschaltung 55 vergleicht den Inhalt A des Zählers 54 mit dem Inhalt B des Registers 56, der die Adresse des letzten zum Bussystem 33 zu übertragenden Bytes gespeichert hat, und dem Inhalt C des Registers 57, der die Adresse des ersten zum Bussystem zu übertragenden Bytes gespeichert hat.

Wenn in einem ersten Fall $A = B = C = 0$ oder $A < C$, $A < B$, $B < 52$ oder $A > C$, $A > B$, $A \leq 52$ ist, wird über das Selektionssignal SEL6 das Auslesen aus dem Eingangs-Zwischenpuffer 30 freigegeben und der Multiplexer 59 so geschaltet, daß sein erster Eingang 65 mit seinem Ausgang 66 verbunden ist. Die Adressen des Zählers 54 werden hierbei ebenfalls verwendet. Die Vergleichsschaltung 55 erzeugt noch zwei weitere Selektionssignale SEL7 und SEL8 zur Steuerung des Ausgangs-Zwischenpuffers 34 und des Multiplexers 61. Das Selektionssignal SEL8 bewirkt in dem oben genannten Fall, daß der Ausgangs-Zwischenpuffer 34 zum Einlesen freigegeben ist. Im ersten Fall bewirkt das Selektionssignal SEL7, daß über den Multiplexer 61 Bytes vom Multiplexer 59 zum Ausgangs-Zwischenpuffer 34 gelangen. Es sei noch erwähnt, daß sich die Zahl 52 daraus ergibt, daß der Zähler 54 bei Null zu zählen beginnt und 53 Bytes in einer Zelle enthalten sind.

Im zweiten Fall, wenn $A \geq C$, $A \leq B$, $B < 52$ oder $C = B = 52$ oder $A = 52$ ist, setzt die Vergleichsschaltung 55 das Selektionssignal SEL6 so, daß das Auslesen aus dem Eingangs-Zwischenpuffer 30 gesperrt ist. Das Selektionssignal SEL7 steuert den Multiplexer 61 so, daß der Ausgangs-Zwischenpuffer 34 Zellen von der Direkt-Zugriffs-Steuerung 64 erhält.

9

Wenn der Zähler 54 den Inhalt 52 aufweist, wird dieser von der Vergleichsschaltung 55 gesperrt. Zumindest wird noch das Selektionssignal SEL8 so verändert, das nach dem Einschreiben des letzten Bytes der Zelle in dem Ausgangs-Zwischenpuffer 34 dieser zum Einschreiben gesperrt ist.

Wenn in dem Ausgangs-Zwischenpuffer 23 eine Zelle zwischengespeichert ist, wird dies der Empfangsschaltung 25 gemeldet. Wenn die Zelle in der Empfangsschaltung 25 ausgewertet werden kann, gibt diese über ein Freigabesignal SEL9 das Auslesen der Zelle aus dem Ausgangs-Zwischenpuffer 34 frei. Weiter wird ein Zähler 65 gestartet, der die Adressen für den Auslesevorgang aus dem Ausgangs-Zwischenpuffer 34 erzeugt.

Zusatzinformationen werden dem Bussystem 33 von der Zugangssteuerung 31 beispielsweise dann geliefert, wenn Zellen für eine bestimmte Verbindung, z.B. für eine Gebührenberechnung, gezählt werden. Zellen, die für Überwachungszwecke eingesetzt werden, weisen z.B. in dem ersten Byte des Informationsfeldes der Zelle Überwachungsinformationen auf. In diesem Fall könnte von der Zugangssteuerung 31 nur das Kopffeld und das erste Byte des Informationsfeldes dem Bussystem zugeführt werden. Wird z.B eine Zelle zur Übertragung einer ATM-Adaptionsschicht vom Type 3/4 verwendet, so überträgt die Zugangssteuerung 31 in diesem Fall 44 Byte des Informationsfeldes zum Bussystem 33.

**Patentansprüche**

1. Lokales, nach dem asynchronen Transfermodus (ATM) arbeitendes Netzwerk mit mehreren Stationen (1 bis 4), die jeweils über eine Netzwerkschnittstelle (5 bis 8) gekoppelt sind, welche eine Koppelvorrichtung (18) und eine Steueranordnung (26) enthält und welche Zellen über die Koppelvorrichtung (18) zwischen Sende- und Empfangs-Ringanschlüssen (11, 12), wenigstens einer Station (1 bis 4) und wenigstens einer Steueranordnung (26) überträgt,
dadurch gekennzeichnet,
daß eine Steueranordnung (26) eine Zugangssteuerung (31) enthält, die in Abhängigkeit vom Inhalt im Kopffeld einer von der Koppelvorrichtung (18) empfangenen Zelle zur Weiterleitung der Zelle oder von ersten Teilen der Zelle und/oder von Zusatzinformationen zu einem Bussystem (33) und damit gekoppelten Einheiten (36 bis 39) vorgesehen ist.

2. Lokales Netzwerk nach Anspruch 1,
dadurch gekennzeichnet,
daß die Zugangssteuerung (31) zur Weiterleitung der von wenigstens einer Einheit (36 bis 39) bearbeiteten Zelle oder von in wenigstens einer Einheit bearbeiteten ersten Teilen der Zelle und/oder der nicht bearbeiteten Zelle oder der nicht bearbeiteten restlichen Teile der Zelle zur Koppelvorrichtung (18) vorgesehen ist.

3. Lokales Netzwerk nach Anspruch 2,
dadurch gekennzeichnet,
daß eine Steueranordnung (26) einen Eingangs-Zwischenpuffer (30) zur Zwischenspeicherung wenigstens einer von der Koppelvorrichtung (18) empfangenen Zelle und einen Ausgangs-Zwischenpuffer (34) zur Zwischenspeicherung von wenigstens einer zur Koppelvorrichtung (18) zu sendenden Zelle enthält und
daß die Zugangssteuerung (31) zur Steuerung des Auslesevorgangs einer Zelle aus dem Eingangs-Zwischenpuffer (30) und des Einlesevorgangs einer Zelle in den Ausgangs-Zwischenpuffer (34) vorgesehen ist.

4. Lokales Netzwerk nach Anspruch 3,
dadurch gekennzeichnet,
daß eine Tabelle (32) zur Lieferung der Adresse des ersten und letzten zum Bussystem (33) zu übertragenen Bytes einer Zelle und/oder von Zusatzinformationen in Abhängigkeit von dem Inhalt des Kopffeldes der in dem Eingangs-Zwischenpuffer (30) zwischengespeicherten Zelle an die Zugangssteuerung (31) vorgesehen ist.

5. Lokales Netzwerk nach Anspruch 4,
dadurch gekennzeichnet,
daß die Zugangssteuerung (31)
   - ein erstes Register (58) zur Speicherung der von der Tabelle (32) gelieferten Zusatzinformationen,

10

EP 0 685 950 A2

- einen ersten Multiplexer (59) zur Weitergabe der von dem Eingangs-Zwischenpuffer (30) ausgegebenen Bytes einer Zelle oder von Zusatzinformationen aus dem ersten Register (58),
- einen zweiten Multiplexer (61) zur Weitergabe der von dem Eingangs-Zwischenpuffer (30) oder von dem Bussystem (33) gelieferten Bytes zum Ausgangs-Zwischenpuffer (34),
- einen Zähler (53) zur Lieferung von Adressen für den Auslesevorgang von Bytes aus dem Eingangs-Zwischenpuffer (30) und zum Verändern seines Zählerinhaltes nach Ausgabe eines Bytes einer Zelle aus dem Eingangs-Zwischenpuffer (30),
- eine Vergleichsschaltung (55) enthält, die zur Steuerung der Multiplexer (59, 61) in Abhängigkeit von dem Zählerinhalt und der ersten und letzten Adresse der zum Bussystem (33) zu übertragenen Bytes vorgesehen ist.

6. Lokales Netzwerk nach Anspruch 5,
   dadurch gekennzeichnet,
   daß nach Einschreiben einer Zelle in den Eingangs-Zwischenpuffer (30)
   - ein zweites Register (56) zum Empfang der Adresse des letzten zu übertragenen Bytes und ein drittes Register (57) und der aufwärts zählende Zähler (54) zum Empfang der Adresse des ersten zu übertragenen Bytes und
   - die Vergleichsschaltung (55)
     - zum Vergleich des Zählerinhaltes und des Inhaltes des zweiten Registers (56),
     - mittels des ersten Multiplexers (59) zur Kopplung des Eingangs-Zwischenpuffers (30) mit dem Bussystem (33), wenn der Zählerinhalt kleiner als der Inhalt des zweiten Registers (56) und
     - mittels des ersten Multiplexers (59) zur Kopplung des ersten Registers (58) mit dem Bussystem (33) vorgesehen ist, wenn der Zählerinhalt gleich oder größer als der Inhalt des zweiten Registers (56) ist, und
   daß anschließend die Vergleichsschaltung (55)
   - zur Zurücksetzung des Zähler (54) auf die Adresse des ersten Bytes der Zelle,
   - zum Vergleich des Zählerinhaltes und der Inhalte des zweiten und dritten Registers (56, 57),
   - mittels des ersten Multiplexers (59) zur Kopplung des Eingangs-Zwischenpuffers (30) mit dem zweiten Multiplexer (61),
   - mittels des zweiten Multiplexers (61) zur Kopplung des Ausgangs-Zwischenpuffers (34) mit dem Bussystem (33), wenn
     - der Zählerinhalt größer oder gleich dem Inhalt des dritten Registers (57) und der Zählerinhalt kleiner oder gleich dem Inhalt des zweiten Registers (56) ist oder
     - die Inhalte der Register (56, 57) oder der Zählerinhalt der Adresse des letzten Bytes der Zelle entsprechen, und
   - mittels des zweiten Multiplexers (61) zur Kopplung des Ausgangs-Zwischenpuffers (34) mit dem ersten Multiplexer (59) vorgesehen ist, wenn
     - der Zählerinhalt und die Inhalte der Register (56, 57) gleich der Adresse des ersten Bytes einer Zelle sind oder
     - der Zählerinhalt kleiner als die Inhalte des zweiten und dritten Registers (56, 57) und der Inhalt des zweiten Registers (56) nicht gleich der Adresse des letzten Bytes der Zelle ist oder
     - der Zählerinhalt größer als die Inhalte des zweiten und dritten Registers (56, 57) ist und der Zählerinhalt nicht größer als die Adresse des letzten Bytes der Zelle ist.

7. Lokales Netzwerk nach Anspruch 5 oder 6,
   dadurch gekennzeichnet,
   daß ein Empfangs-Ringanschluß (11) ein eine Zelle von einer Station (1 bis 4) liefernder Anschluß (13) und ein eine Zelle von einer Steueranordnung (26) liefernder Anschluß über jeweils eine Empfangsschaltung (15, 24, 25) mit der Koppelvorrichtung (18) gekoppelt sind, daß eine Empfangsschaltung (15, 24, 25) mittels einer Wegetabelle (16, 27, 28) zur Hinzufügung eines Tabellenzeigers zu einer eine Steueranordnung (26) als Bestimmungsort aufweisenden Zelle vorgesehen ist und daß die Koppelvorrichtung (18) zur Abtrennung der als Adresse für einen Inhalt der Tabelle (32) dienenden Tabellenzeiger von der Zelle und zur Zuführung des Tabellenzeigers zur Tabelle (32) vorgesehen ist.

8. Netzwerkschnittstelle (5 bis 8) für ein lokales, nach dem asynchronen Transfermodus (ATM) arbeitendes Netzwerk, mit der wenigstens eine Station (1 bis 4) gekoppelt ist, die eine Koppelvorrichtung (18) und eine Steueranordnung (26) enthält und welche Zellen über die Koppelvorrichtung (18) zwischen Sende- und Empfangs-Ringanschlüssen (11, 12), wenigstens einer Station (1 bis 4) und wenigstens

11

einer Steueranordnung (26) überträgt,
dadurch gekennzeichnet,
daß eine Steueranordnung (26) eine Zugangssteuerung (31) enthält, die in Abhängigkeit vom Inhalt im Kopffeld einer von der Koppelvorrichtung (18) empfangenen Zelle zur Weiterleitung der Zelle oder von ersten Teilen der Zelle und/oder von Zusatzinformationen zu einem Bussystem (33) und damit gekoppelten Einheiten (36 bis 39) vorgesehen ist.

FIG. 1

FIG. 4

FIG. 2

FIG. 3

FIG. 5